# EUROPEAN PATENT APPLICATION

(11) **EP 1 081 948 A2**
(43) Date of publication of application: **07.03.2001**
(21) Application number: 00118768.1
(22) Date of filing: 30.08.2000
(51) Int. Cl.: H04N 5/44

(54) **Audio video information apparatus equipped with digital interface**

(30) Priority: 31.08.1999 JP 24473099
(71) Applicant: MATSUSHITA ELECTRIC INDUSTRIAL CO., LTD., Kadoma-shi, Osaka 571-8501 (JP)
(72) Inventor: Ishikawa, Mariko, Kadoma-shi, Osaka, 571-0012 (JP)
(74) Representative: Grünecker, Kinkeldey, Stockmair & Schwanhäusser Anwaltssozietät

(57) **Abstract**

An apparatus equipped with digital interface selectively receiving AV data allowed to be received thereby from apparatuses equipped with digital interface connected to a bus compliant with digital interface standards including IEEE1394. The apparatus comprises an input signal selector and a digital interface compliant with digital interface standards including IEEE1394. It further comprises a memory for storing information related to digital-interface supporting apparatuses allowing signals therefrom to be received by the audio video information apparatus. The controller of the apparatus selects an input signal in accordance with a signal from the input signal selector, outputs information indicating the type of the signal in accordance with information stored in the memory and a signal received by the digital interface, and have the information displayed on a display. Thus, when a terminal compliant with the digital interface standards is selected as the input terminal by switching of received signals in the input signal selector, the name of the input terminal is not displayed, but the name of the apparatus equipped with digital interface transmitting an AV data format receivable by the apparatus is displayed. By virtue of the described arrangement, names of apparatuses equipped with digital interface connected to the bus allowing signals therefrom to be received by this apparatus are displayed and thereby a receivable apparatus can be selected.

## Description

### FIELD OF THE INVENTION

The present invention relates to an audio video information apparatus equipped with digital interface compliant with standards including IEEE1394.

### BACKGROUND OF THE INVENTION

With the development of digital technology in the applications of digital video and satellite broadcasting in recent years, attention has come to be paid to the controlling technology of digitalized apparatuses connected to one network. Under these situations, standardization of the related network and the data structure are being promoted.

According to IEEE1394 standards, for example, 63 pieces of equipment, or nodes, at the maximum, can be connected to a serial bus compliant with IEEE1394. Further, according to the same standards, transfer of data at higher transfer rate is possible. Therefore, users are allowed to utilize media of audio and moving-image information by means of apparatuses connected to the bus with feelings that they are provided almost real time. Operations of such apparatuses as a video tape recorder (VTR) provided with a terminal compliant with standards of digital interface including IEEE1394 will be considered below.

A VTR, for example, frequently has a channel switching function of a television tuner incorporated therein and a switching function of external input terminals. When, in a VTR having a function supporting digital interfaces, a terminal connected to a bus compliant with digital interface standards is selected by terminal switch-selection, the terminal can have another apparatus supporting the digital interface connected thereto. As a display indicating to the user as to which of the outside input terminals is currently selected, the use of a display directly indicating the relevant terminal compliant with digital interface standards, such as "DV", may first be considered. This is a manner of display the same as conventionally used in indicating an external terminal, such as "Line 1" or "L1", or "Line 2" or "L 2".

Recently, there has been increasing the number of types of apparatuses equipped with digital interface having a terminal compliant with digital interface standards including IEEE1394. Accordingly, such cases are becoming popular in which a plurality of apparatuses equipped with digital interface construct a network by means of digital interfaces compliant with IEEE1394. This means that there are, transmitted over a bus compliant with digital interface standards, a variety of audio video (AV) data that are receivable by an apparatus equipped with digital interface.

In the near future, a great number of apparatuses quipped with digital interface, such as audio video apparatuses and apparatuses related to personal computers (PC) compliant with IEEE1394, for example, will come to be interconnected by buses. Then, users may find it inconvenient to choose desired AV data from a variety of AV data transmitted through digital interfaces and, when they have selected some AV data, they may have uncertainty as to what type of AV data they have selected.

### SUMMARY OF THE INVENTION

The present invention was made in order to obviate the above-enumerated inconveniences. An object of the present invention is to allow AV data transmitted over a bus compliant with digital interface standards including IEEE1394 to be easily selected by making similar operation to that made in the selection of a desired channel from terrestrial television broadcasting, CATV, and satellite broadcasting.

In the apparatus equipped with digital interface of the present invention, a terminal compliant with digital interface standards is selected by such operations as channel UP/DOWN and input signal switching. Further, out of AV data transmitted over a bus, compliant with digital interface standards including IEEE1394, to which the terminal is connected, this apparatus is allowed to selectively receive a set of AV data transmitted from an apparatus equipped with digital interface in an AV data format which is receivable by this apparatus.

The audio video information apparatus equipped with digital interface of the present invention comprises a digital interface compliant with digital interface standards including IEEE1394.

The apparatus further comprises a memory storing information related to a digital-interface supporting apparatus allowing signals therefrom to be received by the present audio video information apparatus.

The controller of the present apparatus selects an input signal responsive to a signal from its input signal selector and outputs information indicating the type of the signal in accordance with information stored in the memory and the signal received by the digital interface.

The apparatus further comprises a channel display. When a terminal compliant with digital interface standards is selected as the input terminal through channel switching, the name of the input terminal is not used for the channel display, but the name of the apparatus equipped with digital interface transmitting an AV format receivable by this apparatus is displayed. By virtue of such an arrangement, names of apparatuses allowing signals therefrom to be received by this apparatus, out of apparatuses equipped with digital interface connected with the bus, are displayed and, hence, this apparatus allows selection of an apparatus that is receivable by the same.

### BRIEF DESCRIPTION OF THE DRAWINGS

FIG. 1 is a block diagram showing a structure of an audio video information apparatus equipped with digital interface according to an embodiment of the present invention.
FIG. 2 is a drawing showing an example of a state of the audio video information apparatus equipped with digital interface according to the invention having another apparatus equipped with digital interface connected thereto through a bus.

### DESCRIPTION OF THE PREFERRED EMBODIMENTS

An exemplary embodiment of an audio video information apparatus equipped with digital interface according to the present invention will be described with reference to the accompanying drawings.

### (Embodiment)

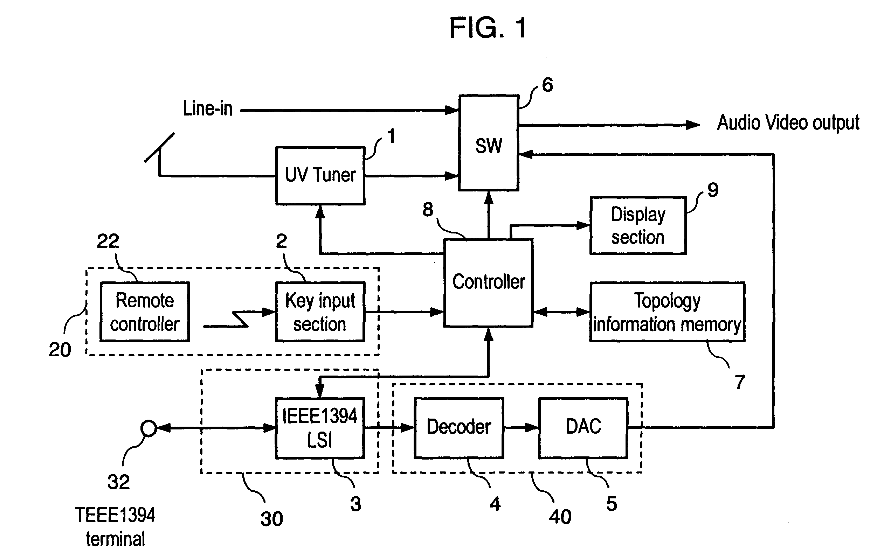

FIG. 1 shows an input switch controller in an audio video information apparatus equipped with digital interface of the invention. Here, the apparatus is assumed, in concrete terms, to be an input signal processor of a digital VTR capable of receiving terrestrial television broadcasting and equipped with a line input of an analog signal and a digital interface compliant with IEEE1394. In FIG. 1, channel switching of the terrestrial television broadcasting is performed in UV tuner receiver 1. Reception of a signal corresponding to the operation of a key on the body of the apparatus and a signal from a remote controller is performed in key entry unit 2. Key entry unit 2 and remote controller 22 form input signal selector 20.

Between IEEE1394 LSI 3 and IEEE1394 terminal 32, signals compliant with IEEE1394 standards are passed. IEEE1394 terminal 32 and LSI 3 form digital interface 30.

Decoder 4 decodes AV data supplied from IEEE1394 LSI 3. Digital-to-analog converter (DAC) 5 converts the decoded digital signal into an analog signal. Decoder 4 and DAC 5 form decoder unit 40.

Input selector switch (SW) 6, in response to a signal from controller 8, selects one of the line input signal, the video input signal and audio input signal from UV tuner receiver 1, and the IEEE1394 input signal from DAC 5, and delivers the selected signal as the AV output of the apparatus.

Topology information memory 7 stores information related to digital interface apparatuses, which are connectable to this apparatus through the bus compliant with IEEE1394 and allow signals therefrom to be received by this apparatus, such as (a) names and the like indicating the types of the apparatuses equipped with digital interface and (b) information including the AV data format transmitted from the apparatuses.

Controller 8 is formed of a microcomputer. Controller 8 controls UV tuner receiver 1, IEEE1394 LSI 3, input selector switch SW 6, display 9, and topology information memory 7, and further performs processes in response to key entry and selection control of the AV output. Display 9 makes display of the currently selected channel, display related to the IEEE1394 terminal, or display related to the line-input terminal.

Operation of the apparatus will be described below.

First, operation for switch-selecting external input terminals, including the television tuner and the IEEE1394 terminal 32, by means of the remote control or the key disposed on the body of the audio video information apparatus will be described.

Channel UP/DOWN control performed by the remote control or the key on the body of the apparatus will be considered.

Operation for receiving television broadcasting is performed in the same way as in the conventional VTR, namely:
(a) Channel setting is made according to the area of reception based on information stored in a memory, not shown, about television broadcast channels receivable in each area.
(b) Channel setting is made through automatic search tuning of television broadcast channels receivable in the area.
(c) Channel setting is made for television broadcast channels to be selected by "Channel UP/DOWN control" through manual setting.

Further, of "Channels" selectable by "Channel UP/DOWN", "Channels" that are not assigned to the television broadcast channels are assigned to an IEEE1394 terminal and a line input terminal. It should be noted here that "Channels" selectable by "Channel UP/DOWN" do not merely mean "television broadcast channels".

Thus, it is arranged such that the IEEE1394 terminal and line input terminal are also selected while television broadcast channels are selected.

The operation will be described with reference to FIG. 1.

Suppose now that the user operates the channel UP/DOWN key disposed on the body of the apparatus or the channel UP/DOWN key on the remote control. Decoding as to what key was operated is made in key entry unit 2. The signal indicative of the result of decoding is supplied to controller 8. Controller 8 causes the existing "Channel" to go UP/DOWN one "Channel".

If the then selected "Channel" is that assigned to the IEEE1394 terminal, controller 8 obtains, through IEEE1394 LSI 3, information as to which apparatus equipped with IEEE1394 interface, or node, is in connection with the IEEE1394 terminal.

Then, the same, referring to topology information in topology information memory 7, selects the first, effective node, i.e., the node transmitting the AV data format that is receivable by this apparatus.

Then, the same controls IEEE1394 LSI 3 so that a connection with the selected node is established.

Upon establishment of the connection, controller 8 allows display 9 to display information identifying the node, or the apparatus, namely, the name (such as TV, VCR, or DVD and the type of product) obtained from the topology information in topology information memory 7.

At the same time, input selector switch SW 6 is switched over to the IEEE1394 input through DAC 5.

Thus, the AV data supplied from the IEEE1394 terminal is delivered to the AV output through IEEE1394 LSI 3, decoder 4, DAC 5, and input selector switch SW 6. At this time, input selector switch SW 6 is switched over by a signal from controller 8 so that the signal is delivered from DAC 5.

When one "Channel" is further shifted UP/DOWN from the current "Channel", and if then this apparatus has its IEEE1394 terminal 32 connected with another apparatus, or node, equipped with IEEE1394 interface receivable by this apparatus, in its live state, controller 8 establishes a connection with the node taking the same procedure as described above. Then, controller 8 allows the name of the apparatus to be displayed on display 9 and the signal therefrom to be delivered to the AV output.

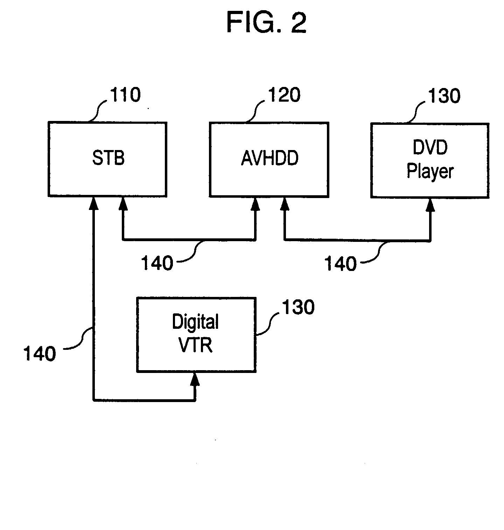

In this way, all of the apparatuses equipped with IEEE1394 interface allowing signals therefrom to be received by this apparatus and connected to this apparatus in their live state are selected one by one each time the "Channel" is shifted so that signals therefrom are received and displayed on the display. When, for example, the present audio video information apparatus equipped with digital interface is digital VTR 100 as shown in FIG. 2, let it be assumed that the AV data format receivable by digital VTR 100 is MPEG2 format. Further, let it be assumed that each of the AV data formats transmitted from Set Top Box (STB) 110, Hard Disk Drive for Audio Video (AVHDD) 120, and Digital Video Disk (DVD) player 130, serially connected to IEEE1394 bus 140, is also MPEG2 format.

In this case, if channel DOWN is carried out, "Channels" are selected for example in the following order:
(1) CH4 of terrestrial television broadcast;
(2) CH2 of terrestrial television broadcast;
(3) Line input, when "L1", for example, is displayed on the display;
(4) STB connected to IEEE1394 input;
(5) AVHDD connected to IEEE1394 input;
(6) DVD player connected to IEEE1394 input; and
(7) CH36 of terrestrial television broadcast.

Here, displays of "Channels" are made in the order of "CH4", "CH2", "L1", "STB", "AVHDD", "DVD", and "CH36".

When a new apparatus equipped with IEEE1394 interface, signals therefrom being receivable by this apparatus, is connected to the bus compliant with IEEE1394, the name of the newly connected apparatus is additionally stored in topology information memory 7.

Further, when an apparatus once registered in topology information memory 7 is not connected with the bus compliant with IEEE1394, it is also possible to make a display of "Unconnected".

According to the present embodiment, as described above, when the "Channel" assigned to the IEEE1394 terminal is selected, the name of the apparatus, allowing signals therefrom to be received by this apparatus, out of the apparatuses equipped with digital interface and connected to the bus compliant with digital interface standards including IEEE1394, can be selectively displayed by reference made to the topology information.

Further, the user is allowed to select each channel, and identify the selected channel, of AV data transmitted from a plurality of external apparatuses over a bus compliant with digital interface standards, free from complicated procedure but by just making the same operation as in the reception of terrestrial television broadcasting.

In the above described embodiment, a case where the IEEE1394 terminal is selected by "Channel" UP/DOWN control was exemplified. However, application of the invention is not limited to the case where only "Channel" UP/DOWN control is executed.

As an example, a case where external input terminals are switch-selected by means of external input terminal switch-selecting keys or a key for directly selecting IEEE1394 terminal will be considered.

An IEEE1394 terminal may be selected by means of the external input terminal switch-selecting key or the key to directly select an IEEE1394 terminal. Then, if apparatuses connected to IEEE1394 input terminals are treated in the same way as in the above described method by operating such keys, it becomes possible to select a channel of AV data from a plurality of external apparatuses transmitted over a bus compliant with digital interface standards and to have the name of the apparatus transmitting the AV data displayed in quite the same way as described above.

## Claims

1. An audio video information apparatus equipped with input and output interface compliant with digital interface standards including IEEE1394, said audio video information apparatus comprising:
an input signal selector unit;
a digital interface unit compliant with the digital interface standards;
a storage unit for storing a first information about a digital-interface-supporting-apparatus allowing signals therefrom to be received by said audio video information apparatus;
a control unit for selecting an input signal in accordance with a first signal supplied from said input signal selector unit and outputting, when an input signal from said digital interface unit is selected, a second information related to the apparatus providing the input signal in accordance with the first information and the input signal.

2. The audio video information apparatus according to claim 1, wherein
the first information is information about a digital-interface-supporting-apparatus providing an audio video (AV) data format which is identical to the AV data format receivable by said audio video information apparatus.

3. The audio video information apparatus according to claim 2, wherein the first information includes
(a) the AV data format and
(b) a name of the digital-interface-supporting-apparatus.

4. The audio video information apparatus according to claim 3, wherein
the second information includes the name of the digital-interface-supporting-apparatus.

5. The audio video information apparatus according to claim 4, further comprising
a display unit for displaying the second information.

6. The audio video information apparatus according to claim 5, wherein
said input signal selector unit selects the input signal supplied to said digital interface unit by means of at least one of channel up, channel down, and input switching operations.

7. The audio video information apparatus according to claim 6, wherein
said control unit, when a signal received by said digital interface unit is selected as the input signal, selects a further input signal supplied to said digital interface unit in accordance with a further first signal and the first information.

8. The audio video information apparatus according to claim 7, further comprising:
a decoder unit for decoding a digital audio video (AV) data into an analog AV signal; and
a switch unit for selecting an analog output signal out of a plurality of analog input signals, including the analog AV signal from said decoder unit, in accordance with a second signal from said control unit, wherein
said control unit, in accordance with a signal from said input signal selector unit, outputs the second signal to said switch unit so that said switch unit is controlled to select the relevant analog signal.

9. The audio video information apparatus according to any of claims 1 to 8, wherein the input signal supplied to said digital interface unit is a signal compliant with IEEE1394 standards.
